(19) Europäisches Patentamt
European Patent Office
Office européen des brevets

(11) Veröffentlichungsnummer: **0 270 000**
**A2**

(12) # EUROPÄISCHE PATENTANMELDUNG

(21) Anmeldenummer: 87117467.8

(51) Int. Cl.4: **C08L 67/02** , C08L 77/00

(22) Anmeldetag: 26.11.87

(30) Priorität: 04.12.86 DE 3641499

(43) Veröffentlichungstag der Anmeldung: 08.06.88 Patentblatt 88/23

(84) Benannte Vertragsstaaten: BE DE FR GB NL

(71) Anmelder: **BASF Aktiengesellschaft**
**Carl-Bosch-Strasse 38**
**D-6700 Ludwigshafen(DE)**

(72) Erfinder: **Lausberg, Dietrich, Dr.**
**Nachtigalstrasse 32a**
**D-6700 Ludwigshafen(DE)**
Erfinder: **McKee, Graham Edmund, Dr.**
**Kastanienweg 8**
**D-6940 Weinheim(DE)**
Erfinder: **Knoll, Manfred**
**Pfrimmstrasse 1**
**D-6521 Wachenheim(DE)**
Erfinder: **Payne, Robert, Dr.**
**Bessemerstrasse 20**
**D-6700 Ludwigshafen(DE)**

(54) **Thermoplastische Formmassen auf der Basis von Polyestern und Polyamiden.**

(57) Thermoplastische Formmassen, enthaltend als wesentliche Komponenten,

A) 20 bis 79,9 Gew.% eines Polyesters
B) 20 bis 79,9 Gew.% eines Polyamids
C) 0,1 bis 30 Gew.% einer polymeren Komponente mit Hydroxylgruppen sowie darüber hinaus
D) 0 bis 30 Gew.% eines schlagzäh modifizierenden Kautschuks und
E) 0 bis 60 Gew.% verstärkende Füllstoffe.

EP 0 270 000 A2

## Thermoplastische Formmassen auf der Basis von Polyestern und Polyamiden

Die Erfindung betrifft thermoplastische Formmassen auf der Basis von Polyestern und Polyamiden, enthaltend als wesentliche Komponenten

A) 20 bis 79,9 Gew.% eines Polyesters
B) 20 bis 79,9 Gew.% eines Polyamids
C) 0,1 bis 30 Gew.% einer polymeren Komponente mit Hydroxylgruppen sowie darüber hinaus
D) 0 bis 30 Gew.% eines schlagzäh modifizierenden Kautschuks und
E) 0 bis 60 Gew.% Füllstoffe.

Weiterhin betrifft die Erfindung die Verwendung derartiger Formmassen zur Herstellung von Formkörpern sowie Formkörper, die die erfindungsgemäßen Formmassen als wesentlichen Bestandteil enthalten

In der DE-A-34 07 895 und der DE-A-23 50 852 werden Formmassen aus Polyamiden und Polybutylenterephthalat beschrieben, die eine gute Kriechstromfestigkeit zeigen. Die mechanischen Eigenschaften sind jedoch nicht zufriedenstellend.

Wärmestabilisierte Formmassen auf der Basis von Polyestern, die bis zu 10 Gew.% eines Polyamids, eines Phenoxyharzes und eines organischen Phosphonats sowie einen Füllstoff enthalten, sind Gegenstand der DE-A-26 24 159. Wegen des geringen Polyamidgehalts kann die Schlagzähigkeit dieser Massen nicht befriedigen.

In der EP-A-44141 werden gefüllte Formmassen auf der Basis von Polyestern und Polyamiden beschrieben, die zwar hinsichtlich Verzug und Maßhaltigkeit sehr gut sind, in Festigkeit und Zähigkeit jedoch stark abfallen.

Der vorliegenden Erfindung lag daher die Aufgabe zugrunde, thermoplastische Formmassen auf der Basis von Polyestern und Polyamiden zur Verfügung zu stellen, die sich durch gute mechanische Eigenschaften, insbesondere eine gute Schlagzähigkeit (auch mehraxial) und eine hohe Festigkeit auszeichnen.

Diese Aufgabe wird erfindungsgemäß durch die eingangs definierten thermoplastischen Formmassen gelöst. Bevorzugte Massen dieser Art sind den Unteransprüchen zu entnehmen.

Die in den erfindungsgemäßen Formmassen enthaltenen Polyester A sind an sich bekannt und in der Literatur (z.B. der DE-A-26 22 876) beschrieben. Sie enthalten einen aromatischen Ring in der Hauptkette, der von einer aromatischen Dicarbonsäure herrührt. Der aromatische Ring kann auch substituiert sein, z.B. durch Halogen wie Chlor und Brom oder durch $C_1$ -$C_4$ -Alkylgruppen wie Methyl-, Ethyl-, i-bzw. n-Propyl- und n-, i-bzw. t-Butylgruppen.

Die Polyester können durch Umsetzung von aromatischen Dicarbonsäuren, deren Estern oder anderer esterbilender Derivate derselben mit aliphatischen Dihydroxyverbindungen in an sich bekannter Weise hergestellt werden.

Als bevorzugte Dicarbonsäuren sind Naphthalindicarbonsäure, Terephthalsäure und Isophthalsäure oder deren Mischungen zu nennen. Bis zu 10 Mol.% der aromatischen Dicarbonsäuren können durch aliphatische oder cycloaliphatische Dicarbonsäuren wie Adipinsäure, Azelainsäure, Sebacinsäure, Dodecandisäuren und Cyclohexandicarbonsäuren ersetzt werden.

Von den aliphatischen Dihydroxyverbindungen werden Diole mit 2 bis 6 Kohlenstoffatomen, insbesondere 1,2-Ethandiol, 1,4-Butandiol, 1,6-Hexandiol, 1,4-Hexandiol, 1,4-Cyclohexandiol und Neopentylglykol oder deren Mischungen bevorzugt.

Als besonders bevorzugte Polyester A sind Polyalkylenterephthalate, die sich von Alkandiolen mit 2 bis 6 C-Atomen ableiten, zu nennen. Von diesen werden insbesondere Polyethylenterephthalat und Polybutylenterephthalat bevorzugt.

Die relative Viskosität der Polyester A liegt im allgemeinen im Bereich von 1,2 bis 1,8 (gemessen in einer 0,5 gew.%igen Lösung in einem Phenol/o-Dichlorbenzolgemisch (Gew.-Verh. 1:1 bei 25°C)).

Der Anteil der Polyester A liegt im Bereich von 20 bis 79,9, vorzugsweise von 25 bis 75 und insbesondere 35 bis 65 Gew.%, bezogen auf das Gesamtgewicht der Formmassen.

Als Komponente B enthalten die erfindungsgemäßen thermoplastischen Formmassen ein Polyamid oder Mischungen aus mehreren Polaymiden. Geeignet sind grundsätzlich teilkristalline und amorphe Polyamide, es werden jedoch teilkristalline Polyamide bevorzugt, da die daraus hergestellten Produkte in der Regel solchen aus amorphen Polyamiden hinsichtlich der Wärmeform-und Spannungsrißbeständigkeit überlegen sind. Erfindungsgemäß einsetzbare Polyamide sind an sich bekannt und umfassen z.B. Polyamide mit Molekulargewichten von 5000 oder mehr, wie sie z.B. in den amerikanischen Patentschriften 2 071 250, 2 071 251, 2 130 523, 2 130 948, 2 241 322, 2 312 966, 2 512 906 und 3 393 210 beschrieben sind.

Die Polyamide können z.B. durch Kondensation äquimolarer Mengen einer gesättigten Dicarbonsäure

mit 4 bis 12 Kohlenstoffatomen, mit einem Diamin, welches 4 bis 14 Kohlenstoffatome aufweist, hergestellt werden, oder durch Kondensation von Ω -Aminocarbonsäuren oder durch Polyaddition von Lactamen. Beispiele für Polyamide sind Polyhexamethylenadipinsäureamid (Nylon 66), Polyhexamethylenazelainsäureamid (Nylon 69), Polyhexamethylensebacinsäureamid (Nylon 610), Polyhexamethylendodecandisäureamid (Nylon 612), die durch Ringöffnung von Lactamen erhaltenen Polyamide, wie Polycaprolactam, Polylaurinsäurelactam, ferner Poly-11-aminoundecansäure und Di-(p-aminocyclohexyl)-methandodecandisäureamid. Es ist auch möglich, gemäß der Erfindung Polyamide zu verwenden, die durch Copolykondensation von zwei oder mehr der oben genannten Polymeren oder ihrer Komponenten hergestellt worden sind, z.B. ein Copolymeres aus Adipinsäure, Isophthalsäure und Hexamethylendiamin. Vorzugsweise sind die Polyamide linear und haben Schmelzpunkte von mehr als 200°C.

Bevorzugte Polyamide sind Polyhexamethylenadipinsäureamid, Polyhexamethylensebacinsäureamid und Polycaprolactam. Die Polyamide weisen im allgemeinen eine relative Viskosität von 2,0 bis 5 auf, bestimmt an einer 1 gew.%igen Lösung in $H_2SO_4$ bei 23°C, was einem Molekulargewicht (Gewichtsmittelwert) von etwa 15000 bis 45000 entspricht. Selbstverständlich können auch Mischungen von Polyamiden eingesetzt werden. Der Anteil des Polyamids A an den erfindungsgemäßen Formmassen beträgt 20 bis 79,9 Gew.%, bezogen auf das Gesamtgewicht. Formmassen mit einem Gehalt von 25 bis 75, insbesondere 30 bis 65 Gew.% an Polyamid werden besonders bevorzugt.

Als wesentliche Komponente C enthalten die erfindungsgemäßen Formmassen eine polymere Komponente mit Hydroxylgruppen. Die durchgeführten Versuche ergaben, daß prinzipiell jede Gruppe mit Protonendonatoreigenschaften geeignet sein sollte, daß sich jedoch Gruppen mit der Struktureinheit -OH besonders gut eignen. Die verträglichkeitsverbessernde Wirkung der Komponente C beruht aller Wahrscheinlichkeit nach darauf, daß zwischen der Komponente C und den Komponenten A und B Wechselwirkungen, zum Beispiel H-Brückenbildungen auftreten, die eine bessere Haftung der Phasen aneinander bewirken.

Wie bereits erwähnt, sind principiell alle Polymere mit Hydroxylgruppen, die im wesentlichen frei zur Verfügung stehen, geeignet. Es ist natürlich darauf zu achten, daß die Komponenten A und B gegenüber der Komponente C stabil sind. Dies ist insbesondere bei Verwendung von Verbindungen mit sauren -OH-Gruppen zu beachten.

Unter Beachtung dieser Voraussetzungen haben sich einige Gruppen von Verbindungen als besonders vorteilhaft herausgestellt, die nachfolgend beschrieben werden. Es ist jedoch grundsätzlich möglich, auch andere Komponenten C einzusetzen, solange die Stabilität der Komponenten A und B nicht darunter leidet.

Die erste Gruppe besonders geeigneter Polymerer sind Polykondensate aus aliphatischen oder aromatischen Diolen oder höherwertiger Alkohole mit Epihalogenhydrinen. Derartige Verbindungen und Verfahren zu ihrer Herstellung sind dem Fachmann an sich bekannt, weshalb sich hier nähere Angaben erübrigen. Grundsätzlich sind aliphatische oder aromatische Diole geeignet. Besonders bevorzugte Dihydroxiverbindungen sind die für die Herstellung von Polycarbonaten eingesetzten Diole.

Wegen der leichten Zugänglichkeit wird ein Polykondensat aus Bisphenol A und Epichlorhydrin mit der Struktur

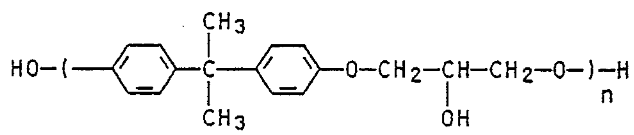

bevorzugt verwendet.

Anstelle von Polymeren, die bereits in der Hauptkette die Hydroxylgruppe aufweisen, können auch Polymere oder Copolymere eingesetzt werden, die diese funktionellen Gruppen durch die Mitverwendung geeigneter Monomerer bei der Polymerisation erhalten, wobei die Gruppen dann in den Polymeren ebenfalls in der Hauptkette, aber auch in Substituenten der Hauptkette vorhanden sein können. Eine weitere Möglichkeit besteht in der Aufpfropfung von geeigneten Monomeren mit OH-Gruppen auf Pfropfgrundlagen, wobei prinzipiell alle Polymere als Pfropfgrundlagen geeignet sind, die mit den Komponenten A und B nicht vollkommen unverträglich sind. Ein gewisser Grad an Unverträglichkeit kann durch eine Erhöhung des Anteils der Hydroxylgruppen ausgeglichen werden.

Geeignete Komponenten C sind daher z.B. Polymere auf der Basis von Polyolefinen, Polystyrol und Kautschukelastomeren, die Hydroxylgruppen -OH aufweisen, die entweder durch Verwendung geeigneter Comonomerer oder aber durch Aufpfropfung der funktionellen Gruppen -OH erhältlich sind. Der Anteil der Co-oder Pfropfmonomeren mit Hydroxylgruppen -OH ist abhängig davon, wie gut verträglich das Basispolymere mit den Komponenten A) und B) ist. Je besser die Verträglichkeit, desto geringer kann der Anteil der OH-Gruppen sein. Aus dem Vorstehenden ergibt sich, daß eine Vielzahl von Polymeren als Komponente C geeignet sind, von denen nachfolgend nur als Beispiel einige bexonders bevorzugte Arten näher vorgestellt werden.

Die erste Gruppe sind Polymere und Copolymere mit einem Gehalt von bis zu 100 Mol.% Vinylphenylcarbinolen, wobei sich Vinylphenyldimethylcarbinole und insbesondere Vinylphenylhexafluorodimethylcarbinol als besonders geeignet erwiesen haben. Als Basispolymere oder Pfropfgrundlage eignen sich wiederum vorteilhaft die vorstehend genannten Arten von Polymeren.

Als zweite Gruppe seien die Polymeren aus Vinylphenolen und Copolymeren der vorstehend erwähnten Basispolymeren mit Vinylphenolen genannt, die im Kern auch Substituenten enthalten können. Substituenten, die die Acidität des phenolischen Wasserstoffs erhöhen, sind besonders geeignet, so z.B. Halogensubstituenten, aber auch andere elektronenanziehende Substituenten.

Als dritte Gruppe seien die Phenol-Formaldehyd-Polykondensate genannt, soweit sie unvernetzt und löslich sind. Diese Produkte können linear oder verzweigt sein.

Daneben sind grundsätzlich Polymere und Copolymere mit allen polymerisierbaren oder pfropfbaren Alkoholen zu nennen.

Es sei erwähnt, daß Polymere mit Hydroxylgruppen(-OH) auf der Basis von Polyamiden oder Polyestern besonders bevorzugt sind, da hier die Verträglichkeit mit mindestens der Komponente A oder B von vornherein gegeben ist, so daß der Anteil der OH-Gruppen gesenkt werden kann.

Die Herstellung der Komponente C kann nach üblichen Verfahren zur Polykondensation bzw. Pfropf- oder Copolymerisation erfolgen, weshalb sich hier nähere Angaben erübrigen.

Der Anteil der Komponente C an den erfindungsgemäßen Formmassen liegt im Bereich von 0,1 bis 30 Gew.%, bezogen auf das Gesamtgewicht der Komponenten A bis C und hängt von der Verträglichkeit des Basispolymeren mit den Komponenten A und B ab. Im allgemeinen haben sich Anteile von 1 bis 25, insbesondere von 3 bis 20 Gew.% als besonders vorteilhaft herausgestellt.

Neben den Komponenten A bis C können die erfindungsgemäßem Formmassen als Komponente D zur Verbesserung der Schlagzähigkeit schlagzäh modifizierende Kautschuke enthalten. Schlagzähigkeitsverbessernde Elastomere (Kautschuke) für Polyamide und Polyester sind dem Fachmann an sich bekannt. Nur beispielsweise seien Kautschuke auf Ethylen-, Propylen-, Butadien-oder Acrylatbasis oder Mischungen dieser Monomeren genannt.

Derartige Polymere werden z.B. in Houben-Weyl, Methoden der organischen Chemie, Bd. 14/1 (Georg-Thieme-Verlag, Stuttgart, 1961), Seiten 392 bis 406 und in der Monographie von C.B. Bucknall, "Toughened Plastics" (Applied Science Publishers, London, 1977) beschrieben.

Im folgenden werden einige bevorzugte Arten solcher Elastomerer vorgestellt.

Als erste bevorzugte Gruppe sind die sogenannten Ethylen-Propylen (EPM) bzw. Ethylen-Propylen-Dien-(EPDM)-kautschuke zu nennen, die vorzugsweise ein Verhältnis von Ethylenresten zu Propylenresten im Bereich von 20:80 bis 80:20, vorzugsweise 40:60 bis 65:35, aufweisen.

Die Mooney-Viskositäten (MLI + 4/100°C) solcher unvernetzter PEM bzw. EPDM-Kautschuke (Gelgehalte im allgemeinen unter 1 Gew.%) liegen bevorzugt im Bereich von 25 bis 100, insbesondere von 35 bis 90 (gemessen am großen Rotor nach 4 Minuten Laufzeit bei 100°C nach DIN 53 523).

EPM-Kautschuke haben im allgemeinen praktisch keine Doppelbindungen mehr, während EPDM-Kautschuke 1 bis 20 Doppelbindungen/100 C-Atome aufweisen können.

Als Dien-Monomere für EPDM-Kautschuke seien beispielsweise konjugierte Diene wie Isopren und Butadien, nicht konjugierte Diene mit 5 bis 25 C-Atomen wie Buta-1,4-dien, Hexa-1,4-dien, Hexa-1,4-dien, 2,5-Dimethyl-hexa-1,5-dien und Octa-1,4-dien, cyclische Diene wie Cyclopentadien, Cyclohexadiene, Cyclooctadiene und Dicyclopentadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyl-tricyclo-(5.2.1.0.2.6)-3,8-decadien oder deren Mischungen genannt. Bevorzugt werden Hexa-1,5-dien, Ethyliden-Norbornen und Dicyclopentadien. Der Diengehalt der EPDM-Kautschuke beträgt vorzugsweise 0,5 bis 10, insbesondere 1 bis 8 Gew.%, bezogen auf das Gesamtgewicht des Kautschuks.

EPM-bzw. EPDM-Kautschuke können auch mit reaktiven Carbonsäuren oder deren Derivaten gepfropft sein. Hier seien nur stellvertretend Acrylsäure, Methacrylsäure und deren Derivate sowie Maleinsäureanhydrid genannt.

Eine weitere Gruppe bevorzugter Kautschuke sind Copolymere des Ethylens mit Acrylsäure-un/oder Methacrylsäureestern, insbesondere solche die zusätzlich noch Epoxy-Gruppen oder Acrylsäure oder Bernsteinsäureanhydrid enthalten. Diese Epoxygruppen werden vorzugsweise durch Zugabe von Epoxygruppen enthaltenden Monomeren der allgemeinen Formeln II oder III zum Monomerengemisch in den Kautschuk eingebaut

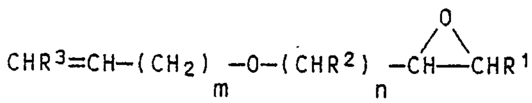
(II)

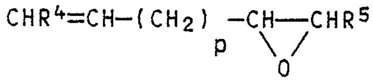
(III)

wobei $R^1$, $R^2$, $R^3$, $R^4$ und $R^5$ Wasserstoff oder Alkylgruppen mit 1 bis 6 C-Atomen darstellen, m eine ganze Zahl von 0 bis 20, n eine ganze Zahl von 0 bis 10 und p eine ganze Zahl von 0 bis 5 ist.

Bevorzugt sind $R^1$, $R^2$ und $R^3$ Wasserstoff, m hat den Wert 0 oder 1 und n ist 1. Die entsprechenden Verbindungen sind Alkylglycidylether oder Vinylglycidylether.

Bevorzugte Beispiele für Verbindungen der Formel II sind Epoxygruppenenthaltende Ester der Acrylsäure und/oder Methacrylsäure, wovon wiederum Glycidylacrylat und Glycidylmethacrylat besonders bevorzugt werden.

Der Ethylengehalt der Copolymeren liegt im allgemeinen im Bereich von 50 bis 98 Gew.%, der Anteil an Epoxygruppen enthaltenden Monomeren und der Anteil des Acrylsäure-und/oder Methacrylsäureesters jeweils im Bereich von 1 bis 49 Gew.%.

Besonders bevorzugt sind Copolymerisate aus
50 bis 98, insbesondere 60 bis 95 Gew.% Ethylen,
1 bis 40, insbesondere 2 bis 20 Gew.% Glycidylacrylat und/oder glycidylmethacrylat,
1 bis 45, insbesondere 10 bis 35 Gew.% n-Butylacrylat und/oder 2-Ethylhexylacrylat.

Weitere bevorzugte Ester der Acryl-und/oder Methacrylsäure sind die Methyl-, Ethyl-, Propyl-und i-bzw. t-Butylester. Auch Acrylsäure selbst kann vorzugsweise eingesetzt werden.

Ein besonders bevorzugtes Comonomer ist Maleinsäureanhydrid.

Daneben können auch Vinylester und Vinylether als Comonomere eingesetzt werden.

Die Herstellung der vorstehend beschriebenen Ethylencopolymeren kann nach an sich bekannten Verfahren erfolgen, vorzugsweise durch statistische Copolymerisation unter hohem Druck und erhöhter Temperatur. Entsprechende Verfahren sind in der Literatur beschrieben.

Der Schmelzindex der Ethylencopolymeren liegt im allgemeinen im Bereich von 1 bis 80 g/10 min (gemessen bei 190°C und 2,16 kg Belastung).

Bevorzugte Elastomere (Kautschuke) D) sind weiterhin Pfropfcopolymerisate mit Butadien, Butadien/Styrol-, Butadien/Acrylnitril und Acrylestern als Pfropfgrundlage wie sie z.B. in den DE-A-16 94 173 und DE-A-23 48 377 beschrieben werden.

Von diesen sind insbesondere die sogenannten ABS-Polymerisate zu nennen, wie sie in den DE-A-20 35 390, DE-A-22 48 242 und der EP-A-22 216 beschrieben werden, wobei letztere besonders bevorzugt sind.

Als Kautschuk D können auch Pfropfpolymerisate aus
25 bis 98 Gew.% eines Acrylatkautschuks mit einer Glasübergangstemperatur von unter -20°C als Pfropfgrundlage
und
2 bis 75 Gew.% eines copolymerisierbaren ethylenisch ungesättigten Monomeren, dessen Homo-bzw. Copolymerisate eine Glasübergangstemperatur von mehr als 25°C aufweisen, als Pfropfauflage
eingesetzt werden.

Die Pfropfgrundlage sind Acrylat bzw. Methacrylatkautschuke, wobei bis zu 40 Gew.% weiterer Comonomerer enthalten sein können. Die $C_1$ -$C_8$ -Ester der Acrylsäure bzw. Methacrylsäure sowie deren halogenierte Derivate wie auch aromatische Acrylsäureester und deren Mischungen werden bevorzugt. Als Comonomere in der Pfropfgrundlage seien Acrylnitril, Methacrylnitril, Styrol, $\alpha$ -Methylstyrol, Acrylamide, Methacrylamide sowie Vinyl-$C_1$ -$C_6$ -Alkylether angeführt.

Die Pfropfgrundlage kann unvernetzt oder teilweise oder vollständig vernetzt sein. Die Vernetzung wird durch Copolymerisation von vorzugsweise 0,02 bis 5 Gew.%, insbesondere 0,05 bis 2 Gew.% eines vernetzenden Monomeren mit mehr als einer Doppelbindung erzielt. Geeignete vernetzende Monomere werden z.B. in der DE-A-27 26 256 und der EP-A-50 265 beschrieben.

Bevorzugte vernetzende Monomere sind Triallylcyanurat, Triallylisocyanurat, Triacryloylhexahydro-s-triazin und Trialkylbenzole.

Falls die vernetzenden Monomeren mehr als 2 polymerisierbare Doppelbindungen aufweisen, ist es vorteilhaft ihre Menge auf nicht mehr als 1 Gew.%, bezogen auf die Pfropfgrundlage, zu beschränken.

Besonders bevorzugte Pfropfgrundlagen sind Emulsionspolymerisate mit einem Gelgehalt von mehr als 60 Gew.% (bestimmt in Dimethylformamid bei 25°C nach M. Hoffmann, H. Krömer, R. Kuhn, Polymeranalytik, Georg-Thieme-Verlag, Stuttgart, 1977).

Ebenfalls geeignet als Pfropfgrundlage sind Acrylat-Kautschuke mit einem Dienkern, wie sie z.B. in der EP-A-50 262 beschrieben werden.

Als Pfropfmonomere eignen sich besonders Styrol, α-Methylstyrol, Acrylnitril, Methacrylnitril und Methylmethacrylat oder deren Mischungen, insbesondere solche aus Styrol und Acrylnitril im Gewichtsverhältnis 90/10 bis 50/50.

Die Pfropfausbeute, d.h. der Quotient aus der Menge des aufgepfropften Monomeren und der Menge des eingesetzten Pfropfmonomeren liegt im allgemeinen im Bereich von 20 bis 80 %.

Kautschuke auf der Basis von Acrylaten, die erfindungsgemäß verwendet werden können, werden z.B. in der DE-A-24 44 584 und der DE-A-27 26 256 beschrieben.

Die Kautschuke D weisen vorzugsweise eine Glasübergangstemperatur von unter -30°C, insbesondere von unter -40°C auf, was zu einer guten Schlagzähigkeit auch bei tiefen Temperaturen führt.

Es versteht sich, daß auch Mischungen der vorstehend aufgeführten Kautschuktypen eingesetzt werden können.

Als Füllstoffe E seien beispielsweise Asbest, Kohle und vorzugsweise Glasfasern genannt, wobei die Glasfasern z.B. in Form von Glasgeweben, -matten, -vliesen und/oder vorzugsweise Glasseidenrovings oder geschnittener Glasseide aus alkaliarmen E-Glasen mit einem Durchmesser von 5 bis 200 µm, vorzugsweise 8 bis 15 µm, zur Anwendung gelangen, die nach ihrer Einarbeitung eine mittlere länge von 0,05 bis 1 mm, vorzugsweise 0,1 bis 0,5 mm, aufweisen.

Andere geeignete Füllstoffe sind z.B. Wollastonit, Calciumcarbonat, Glaskugeln, Quarzmehl, Si-und Bornitrid, amorphe Kieselsäure, Asbest, Calciumsilicat, Calciummetasilicat, Magnesiumcarbonat, Kaolin, Glimmer und Feldspat oder Mischungen dieser Füllstoffe.

Von den vorstehend genannten verstärkenden Füllstoffen haben sich insbesondere Glasfasern als vorteilhaft herausgestellt, besonders dann, wenn eine sehr hohr Wärmeformbeständigkeit gefordert ist.

Der Anteil der Komponente E beträgt 0 bis 60, vorzugsweise 2 bis 50 und insbesondere 5 bis 30 Gew.%, bezogen auf das Gesamtgewicht der Formmassen.

Neben den Komponenten A bis E können die erfindungsgemäßen Formmassen übliche Zusatzstoffe und Verarbeitungshilfsmittel enthalten. Deren Anteil beträgt im allgemeinen bis zu 60, vorzugsweise bis zu 50 Gew.%, bezogen auf das Gesamtgewicht der Komponenten A bis E.

Übliche Zusatzstoffe sind beispielsweise Stabilisatoren und Oxidationsverzögerer, Mittel gegen Wärmezersetzung und Zersetzung durch ultraviolettes Licht, Gleit-und Entformungsmittel, Färbemittel, wie Farbstoffe und Pigmente, Keimbildungsmittel und Weichmacher.

Oxidationsverzögerer und Wärmestabilisatoren, die den thermoplastischen Massen gemäß der Erfindung zugesetzt werden können, sind z.B. Halogenide von Metallen der Gruppe I des periodischen Systems, z.B. Natrium-, Kalium-, Lithium-Halogenide, ggf. in Verbindung mit Kupfer-(I)-Halogeniden, z.B. Chloriden, Bromiden oder Iodiden. Ferner sind sterisch gehinderte Phenole, Hydrochinone, substituierte Vertreter dieser Gruppe und Mischungen derselben, vorzugsweise in Konzentrationen bis 1 Gew.%, bezogen auf das Gewicht der Mischung, einsetzbar.

Beispiele für UV-Stabilisatoren sind verschiedene substituierte Resorcine, Salicylate, Benzotriazole und Benzophenone, die im allgemeinen in Mengen bis zu 2,0 Gew.% eingesetzt werden.

Gleit-und Entformungsmittel, die in der Regel in Mengen bis zu 1 Gew.% der thermoplastischen Masse zugesetzt werden, sind Stearinsäuren, Stearylalkohol, Stearinsäureester und -amide sowie die Fettsäureester des Pentaerythrits.

Ferner können organische Farbstoffe, wie Nigrosin, Pigmente, z.B. Titandioxid, Cadmiumsulfid, Cadmiumsulfidselenid, Phthalocyanine, Ultramarinblau oder Ruß zugesetzt werden. Keimbildungsmittel, wie Talkum, Calciumfluorid, Natriumphenylphosphinat, Aluminiumoxid oder feinteiliges Polytetrafluorethylen können in Mengen z.B. bis zu 5 Gew.%, bezogen auf die Komponenten A bis E angewandt werden.

Die Herstellung der erfindungsgemäßen Formmassen kann nach an sich bekannten Mischverfahren z.B. durch Einarbeiten des Polyesters in das Polyamid bei Temperaturen oberhalb des Schmelzpunkts der Komponenten erfolgen, insbesondere bei Temperaturen von 220 bis 300°C, besonders bei 250 bis 290°C, in üblichen Mischvorrichtungen, wie Extrudern, Knetern und Mischern. Die Komponenten D und E, die gegebenenfalls enthalten sind, werden entsprechend zugegeben.

Aus den erfindungsgemäßen Formmassen lassen sich leicht Formkörper mit guter Oberflächenbeschaffenheit und verbesserter Schlagzähigkeit bei hoher Steifigkeit, insbesondere bei tiefen Temperaturen, herstellen. Weder im Formörper noch in der Schmelze tritt eine Entmischung der Polymerkomponenten ein.

Beispiele

Zur Herstellung von erfindungsgemäßen thermoplastischen Formmassen wurden folgende Ausgangsstoffe eingesetzt.

Komponente A (Polyester):

$A_1$ : Polyethylenterephthalat mit einer relativen Viskosität von 1,38 (gemessen in 0,5 gew.%iger Lösung in Phenol/o-Dichlorbenzol (Gew.-Verh. 1:1) bei 25°C)

$A_2$ : Polybutylenterephthalat mit einer relativen Viskosität von 1,6 (gemessen wie bei $A_1$ )

Komponente B (Polyamide):

B 1: Polycaprolactam mit einer relativen Viskosität von 4,0 (gemessen in 1 gew.%iger Lösung in konzentrierter Schwefelsäure bei 25°C)

$B_2$ : Polyhexamethylensebacinsäureamid mit einer relativen Viskosität von 3,23 (gemessen wie bei $B_1$ )

$B_3$ : Polyamid, hergestellt aus Hexamethylendiamin und einem Gemisch aus Isophthalsäure und Terephthalsäure (Gew.-Verh. 60/40) mit einer relativen Viskosität von 1,91, gemessen an einer 1 gew.%igen Lösung in konzentrierter Schwefelsäure bei 25°C.

Komponente C:

C: Polykondensat aus 2,2-Di-(4-Hydroxyphenyl)propan und Epichlorhydrin (Phenoxy™, Union Carbide) mit einer relativen Viskosität von 1,13, gemessen in 0,5 gew.%iger Lösung in Dichlormethan bei 25°C. Struktur:

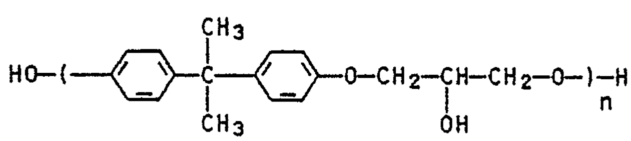

Komponente D:

Zur Verbesserung der Schlagzähigkeit wurden folgende Kautschuke eingesetzt:

D 1: Pfropfkautschuk mit einer Pfropfgrundlage (75 Gew.%) aus Poly-n-Butylacrylat, das mit Butandioldiacrylat umgesetzt wurde und einer Pfropfhülle (25 Gew.%) eines Copolymeren aus Styrol und Acrylnitril (Gew.-Verh. 75:25) hergestellt durch Emulsionspolymerisation in an sich bekannter Weise. (Mittlere Teilchengröße $d_{50}$ = 250 nm)

D 2: Pfropfkautschuk mit einer Pfropfgrundlage aus Polybutadien (75 %) und einer Pfropfhülle (25 %) eines Copolymeren aus Styrol und Acrylnitril (Gew.-Verh. 75:25) hergestellt durch Emulsionspolymerisation in an sich bekannter Weise. ($d_{50}$ = 250 nm)

D 3: Terpolymeres aus Ethylen, n-Butylacrylat und Acrylsäure (Gew.-Verh. 65/30/5) hergestellt durch Hochdruckpolymerisation in bekannter Weise. (MFI = (Schmelzindex) 10 g/10 min (190°C, 2,16 kg))

D 4: Copolymerisat aus Ethylen/n-Butylacrylat/Glycidylmethacrylat (Gewichtsverhältnis 67/30/3) mit einer Glasübergangstemperatur von -48°C.

(Der mittlere Teilchendurchmesser $d_{50}$ ist der Durchmesser, ober-und unterhalb dessen die Durchmesser von jeweils 50 Gew.% der Teilchen liegen.)

Komponente E

Glasfasern (Typ R 20 EX 4 der Fa. OCF)

Die Formmassen wurden hergestellt indem die Komponenten intensiv gemischt, in einem Zweischneckenextruder bei 260°C aufgeschmolzen, homogenisiert und in ein Wasserbad extrudiert wurden. Nach Granulierung und Trocknung wurde die Mischung auf einer Spritzgußmaschine zu Prüfkörpern geformt und diese ohne weitere Nachbehandlung untersucht.

Die Lochschlagzähigkeit wurde nach DIN 53753, die Schlagzähigkeit nach DIN 53 453, der Elastizitätsmodul nach DIN 53 457 und die Zugfestigkeit nach DIN 53 455 bestimmt. Die Konditionierung wurde bei 23°C und 50 % rel. Luftfeuchte über 30 Tage vorgenommen. Die Ergebnisse sind in Tabelle 1 und 2 mit der Zusammensetzung der einzelnen Formmassen aufgeführt (alle %-Angaben beziehen sich auf das Gewicht).

Tabelle 1 zeigt die Ergebnisse ohne, Tabelle 2 die Ergebnisse mit Glasfaserverstärkung.

Tabelle 1 (alle Mengenangaben beziehen sich auf Gewichtsprozente)

| Beispiel Nr. | Komponente A | Komponente B | Komponente C | Komponente D | Lochschlagzähigkeit (kJ/m²) 23°C | Lochschlagzähigkeit (kJ/m²) 40°C | Elastizitätsmodul (N/mm²) trocken | Elastizitätsmodul (N/mm²) konditioniert |
|---|---|---|---|---|---|---|---|---|
| 1V | 100 $A_1$ | | | | 8 | 4 | 3200 | - |
| 2V | 100 $A_2$ | | | | 35 | 16 | 2600 | - |
| 3V | | 100 $B_1$ | | | 90 | 28 | 2900 | 1400 |
| 4V | | 100 $B_2$ | | | 90 | 45 | 2200 | 1400 |
| 5V | 50 $A_1$ | 50 $B_1$ | | | 25 | 15 | 3100 | 2300 |
| 6V | 50 $A_2$ | 50 $B_2$ | | | 8 | 8 | 2700 | 2100 |
| 7 | 45 $A_2$ | 45 $B_2$ | 10 | | 85 | 20 | 2900 | 2400 |
| 8 | 45 $A_1$ | 45 $B_1$ | 10 | | 60 | 25 | 3400 | 2400 |
| 9 | 45 $A_1$ | 45 $B_2$ | 10 | | 90 | 50 | 3000 | 2500 |
| 10 | 45 $A_1$ | 45 $B_1$ | 5 | 5 $D_1$ | 110 | 45 | 2800 | 2250 |
| 11 | 45 $A_2$ | 45 $B_2$ | 5 | 5 $D_2$ | 105 | 60 | 2300 | 1800 |
| 12 | 45 $A_1$ | 45 $B_1$ | 5 | 5 $D_3$ | 120 | 45 | 2800 | 2200 |
| 13 | 45 $A_1$ | 45 $B_1$ | 5 | 5 $D_4$ | 115 | 60 | 2700 | 2200 |
| 14 | 45 $A_2$ | 45 $B_3$ | 10 | | 50 | 15 | 3000 | 2400 |

V = Vergleichsversuch

Tabelle 2 (alle Mengenangaben in Gew.%)

| Beispiel Nr. | Komponente A | Komponente B | Komponente C | Komponente D | Komponente E | Elastizitätsmodul $N/mm^2$ | Schlagzähigkeit $kJ/m^2$ (bei 23°C) | Zugfestigkeit $N/mm^2$ |
|---|---|---|---|---|---|---|---|---|
| 15 | 40,5 $A_1$ | 40,5 $B_1$ | 9 | | 10 | 5300 | 23 | 100 |
| 16 | 36 $A_1$ | 40,5 $B_1$ | 8 | | 20 | 8000 | 30 | 140 |
| 17 | 31,5 $A_1$ | 31,5 $B_1$ | 7 | | 30 | 11000 | 28 | 152 |
| 18 | 30 $A_1$ | 30 $B_1$ | 8 | 12 $D_3$ | 20 | 6800 | 40 | 105 |
| 19 | 36 $A_2$ | 36 $B_2$ | 8 | | 20 | 7900 | 40 | 135 |
| 20 | 40,5 $A_1$ | 40,5 $B_2$ | 8 | | 20 | 8000 | 32 | 140 |
| 21V | 70 $A_1$ | - | - | | 20 | 11800 | 22 | 150 |
| 22V | 70 $A_1$ | - | - | | 30 | 10000 | 35 | 135 |
| 23V | 40 $A_1$ | 40 $B_1$ | - | | 20 | 7900 | 10 | 80 |
| 24V | 40 $A_1$ | 40 $B_2$ | - | | 20 | 7500 | 16 | 90 |

## Ansprüche

1. Thermoplastische Formmassen, enthaltend als wesentliche Komponenten,
A) 20 bis 79,9 Gew.% eines Polyesters
B) 20 bis 79,9 Gew.% eines Polyamids
C) 0,1 bis 30 Gew.% einer polymeren Komponente mit Hydroxylgruppen
sowie darüber hinaus
D) 0 bis 30 Gew.% eines schlagzäh modifizierenden Kautschuks und
E) 0 bis 60 Gew.% Füllstoffe.

2. Thermoplastische Formmassen nach Anspruch 1, enthaltend 2 bis 50 Gew.% der Komponente E).

3. Verwendung der thermoplastischen Formmassen gemäß den Ansprüchen 1 und 2 zur Herstellung von Formkörpern.

4. Formkörper, enthaltend als wesentliche Komponente Formmassen gemäß den Ansprüchen 1 und 2.